# EUROPEAN PATENT SPECIFICATION

(11) **EP 1 940 186 B1**
(45) Date of publication and mention of the grant of the patent: **30.09.2009**
(21) Application number: 06127201.9
(22) Date of filing: 27.12.2006
(51) Int. Cl.: H04W 8/20, G06F 11/14

(54) **Method and apparatus for storing data from a network address**
Verfahren und Vorrichtung zur Speicherung von Daten einer Netzwerkadresse
Procédé et appareil pour le stockage de données à partir d'une adresse de réseau

(43) Date of publication of application: 02.07.2008
(73) Proprietor: Research In Motion Limited, Waterloo, Ontario N2L 3W8 (CA)
(72) Inventor: Bells, Matthew, Waterloo Ontario N2L 6M2 (CA); Tysowski, Piotr, Waterloo Ontario N2K 2R2 (CA)
(74) Representative: MERH-IP Matias Erny Reichl Hoffmann

(56) References cited:
- EP-A- 1 215 596
- US-A1- 2003 134 625

## Description

The present application relates generally to the storage of data from a network address and to backup of the data at a portable electronic device with data embodied at a communication network.

Portable electronic devices such as wireless personal digital assistants (PDAs), smart telephones and laptop computers with wireless capabilities have gained widespread use for a variety of functions. Such devices are commonly used for communication purposes including transportation of data, and run on a wide variety of networks from data-only networks such as Mobitex and DataTAC to complex voice and data networks such as GSM/GPRS, CDMA, EDGE, UMTS and CDMA2000 networks.

These portable electronic devices commonly include databases for storing data that is selectively retrievable by a user of a device. The data forms a series of data records, each data record containing one or more fields. During operation of the device, the data is retrieved and displayed or otherwise made available to the user. The data can be modified, added to or deleted by the user of the device.

Advances in data storage have accompanied advances in portable electronic devices to provide for backup of data stored at the electronic device. By backing-up the device, data can be recovered in the event of data loss at the electronic device. Various electronic devices are backed-up by way of communication over a fixed (wire) connection between the electronic device and, for example, a computing station such as a desktop computer. Other portable electronic devices provide for backup of data stored thereon, to a computing station by way of a radio interface, using, for example, the networks listed above. Thus, data is sent over a radio communication channel of a radio communication system, thereby forming a communications link between the portable electronic device and a remote station (a station not linked by wire communication). Thus, data stored in a database of the portable electronic device is backed-up to a computing station. Data is also transmitted from the computing station to the portable electronic device to synchronize databases of the portable electronic device with databases of the computing station.

Data backup over a radio communication channel is clearly advantageous as data can be communicated remotely over large distances. Conventional manners of data backup over radio communication channels suffer disadvantages, however. Such data backup can be prohibitively bandwidth consumptive. If many records are transferred or the size of a transferred record is large, the transfer time can be extensive meaning that a communication channel is opened for a long period of time to transfer the data records, which can be costly for the user.

This problem is exacerbated when large files are retrieved over a radio communication channel, for example, from a website. First, the files are transmitted to the portable electronic device over a radio communication channel and saved in one of the databases on the portable electronic device. To provide a backup of the files, these files are then transmitted over the radio communication channel to the computing station for storage at the computing station.

EP1215596 discloses a collection server for updating a mobile terminal using collection conditions received from the mobile terminal. The collection conditions include a URL, parts of an affiliated HTML page and synchronization interval values. Based on the collection conditions, the collection server updates the mobile terminal by retrieving data at the URL.

US2003/0134625 discloses a data backup method on a network where a mobile phone stores data to be backed up as well as programs configured to transmit and retrieve the backup data, the phone being configured to process a user request for a data backup operation and transmit or receive the backup data.

Improvements in backing up databases connected by wireless interface are therefore desirable.

### GENERAL

According to one aspect, there may be provided a method of storing data from a network resource associated with a network address, in a database of a portable electronic device, the method comprising: obtaining at said portable electronic device a data record from the network resource associated with the network address; storing said data record along with a network address identifier, wherein storing said data record comprises generating a content representation for said data record; and transmitting said network address identifier and said content representation to a backup device for retrieval of said data record from the network address and storage of said data record in a backup database, if said content representation is in agreement with a representation of said content of said data record retrieved by said backup device.

According another aspect, there may be provided a computer-readable medium having computer-readable code embodied therein for execution by a computing device for implementing the above method of storing data.

According to another aspect, there may be provided a method of storing data from a network resource associated with a network address at a backup device), the method comprising: receiving at said backup device a network address identifier and a content representation associated with a data record stored at a database of a portable electronic device; retrieving said data record from the network address using said network address identifier; comparing said content representation for said data record to a representation of content of said data record retrieved by said backup device, prior to storing said data record; and if said content representation is in agreement with said representation of said content of said data record retrieved by said backup device, proceeding to said storing the data record in said backup database.

According to another aspect, there may be provided a computer-readable medium having computer-readable code embodied therein for execution by a processor for implementing the method of storing data from a network address at a backup device.

According to another aspect, there may be provided a system for storing data from a from a network resource associated with a network address, the system comprising: a memory for storage of a backup database; a receiver for receiving a network address identifier and a content representation associated with a data record stored at a database of a portable electronic device; and a processor operably coupled to said receiver and said memory, said processor enabled for: retrieving said data record from said network address using said network address identifier; comparing said content representation for said data record to a representation of content of said data record retrieved by said backup device, prior to storing the data record and if said content representation is in agreement with said representation of said content of said data record retrieved by said backup device, proceeding to said storing the data record in said backup database, if said content representation is not in agreement with said representation of said content of said data record retrieved by said backup device: transmitting a request for full data record transfer from said portable electronic device; receiving said full data record from said portable electronic device; and proceeding to said storing the data record in said backup database.

According to yet another aspect, there may be provided a portable electronic device comprising: a memory for storage of a database of records; a transmitter and receiver for receiving a data record from a network resource associated with a network address; a processor coupled to said memory and said transmitter and receiver, said processor enabled for: obtaining said data record from said network address; generating a content representation for said data record; storing said data record and said content representation in association with a network address identifier associated with the data record, in said database of said memory; and via said transmitter: transmitting the network address identifier and said content representation to a backup device during synchronization, for retrieval of said data record from said network address and storage of said data record in a backup database , if said content representation is in agreement with a representation of said content of said data record retrieved by said backup device; and transmitting said data record to said backup device for storage in said backup database , in response to a request from said backup device for full data record transfer, if said content representation is not in agreement with said representation of said content of said data record retrieved by said backup device.

Data records that are available, for example on a network available to a synchronization server, can be retrieved directly from the network. The network can include, for example, the internet, an intranet or a user's mail store. Thus, there is no need to send the data record available on the network to the synchronization server during synchronization. Instead, the network address, such as a URL, for example, can be sent to identify the data record and the server can retrieve the data record. Advantageously, battery power is saved while the speed of wireless synchronization is increased and bandwidth is decreased. Bandwidth costs are thereby decreased. The savings is greater with larger data records such as pictures, songs, themes or others.

### BRIEF DESCRIPTION OF THE DRAWINGS

The method and apparatus for storing data from a network address will be better understood with reference to the following description and to the Figures, in which:

Figure 1 is a functional block diagram of a radio communication system and portable electronic device;

Figure 2 is a block diagram of certain internal components within the portable electronic device;

Figure 3 is a block diagram of certain internal components within a synchronization server;

Figure 4 is a sequence diagram illustrating functions carried out at both the portable electronic device and the communication system during receiving and storing of data at the portable electronic device and during synchronizing by backing up the data stored at the portable electronic device, in accordance with one embodiment;

Figure 5 shows a sequence diagram illustrating functions carried out at both the portable electronic device and the communication system during receiving and storing of data at the portable electronic device, in accordance with an aspect of another embodiment;

Figure 6 shows a sequence diagram illustrating functions carried out at both the portable electronic device and the communication system during synchronizing of a database of the portable electronic device with a database of the communication system, in accordance with as aspect of the embodiment of Figure 5; and

Figure 7 shows a sequence diagram illustrating functions carried out at both the portable electronic device and the communication system during updating of the database of the communication system, in accordance with another aspect of the embodiment of Figure 5.

### DESCRIPTION OF PREFERRED EMBODIMENTS

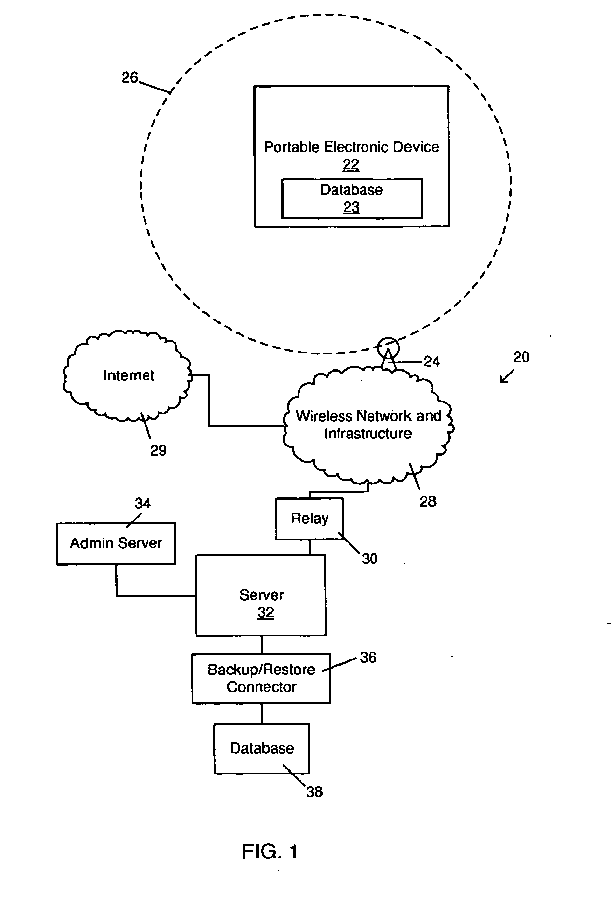

Reference is first made to Figure 1 which shows a functional block diagram of a communication system indicated generally by the numeral 20 and a portable electronic device 22. The communication system 20 provides for communications with portable electronic devices including the exemplary portable electronic device 22, as shown. The portable electronic device 22 and the communication system 20 are operable to effect communications over a radio communications channel therebetween. Data originating at the portable electronic device 22 is communicated to the communication system 20 by way of the radio communications channel. Similarly, data originating at the communication system 20 is communicated from the communication system 20 to the portable electronic device 22 by way of the radio communications channel, thereby providing data to the portable electronic device 22.

For the purpose of illustration, the communication system 20 is functionally represented in Figure 1 and a single base station 24 is shown. The base station 24 defines a coverage area, or cell 26 within which communications between the base station 24 and the portable electronic device 22 can be effectuated. It will be appreciated that the portable electronic device 22 is movable within the cell 26 and can be moved to coverage areas defined by other cells that are not illustrated in the present example. The communication system 20 includes a base station 24 that is part of a wireless network and infrastructure 28 that provides a link to the portable electronic device 22. The wireless network and infrastructure 28 includes a number of base stations (not shown) that provide the other cells referred to above, as well as wireless service provider network operations. The wireless network and infrastructure 28 is also connected to the internet 29. Data is delivered to the portable electronic device 22 via wireless transmission from the base station 24. Similarly, data is sent from the portable electronic device 22 via wireless transmission to the base station 24.

Wireless networks and infrastructures include, for example, data-centric wireless networks, voice-centric wireless networks, or dual-mode wireless networks. For the purpose of the present exemplary embodiment, the wireless network and infrastructure 28 includes a dual-mode wireless network that supports both voice and data communications over the same physical base stations.

The communication system 20 includes a relay device 30 that is connected to the wireless network and infrastructure 28 and, in turn, to a server 32. It will be understood that the functions provided by the relay device 30 and the server 32 can be embodied in the same device. The server 32 is also connected to an administration server 34, as shown. The administration server 34 provides administrative services to and control over the server 32.

The server 32 is also functionally coupled through a connector 36 to a backup/restore database 38. Other connectors and databases can be provided, for example, for synchronization purposes. Such connectors and databases are not shown in Figure 1 for the purpose of simplicity. The connector 36 receives commands from the server 32. It will be understood that the connector 36 is a functional component and can be provided by way of an application on the server 32. The backup/restore database 38 is used for storing data records, including, for example, copies of multimedia data files stored on the portable electronic device 22.

The portable electronic device 22, of which only a functional portion is shown in Figure 1 for the purposes of the present description, includes a plurality of databases, one database 23 being shown. The database 23 can be selectably altered in a manner such that the database 38 of the communication system 20 does not match the database 23 of the portable electronic device 22. In other words, data records can be added to the database 23 or can be modified or deleted from the database 23.

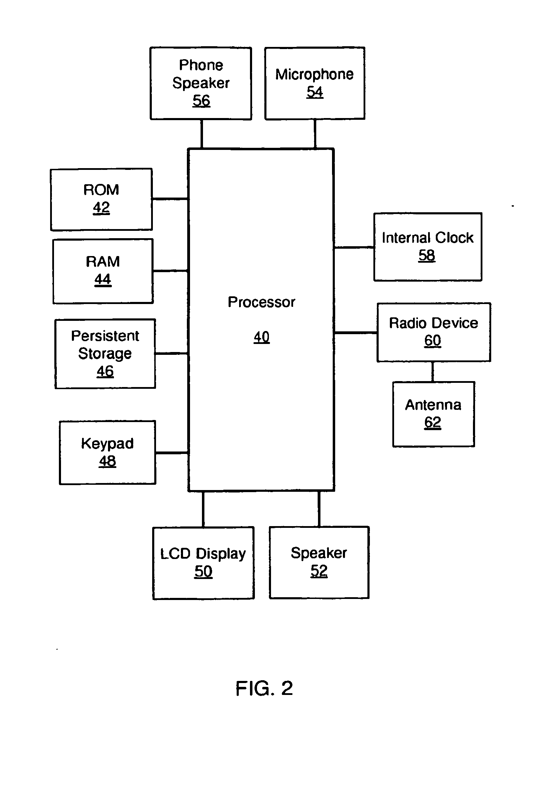

Referring now to Figure 2, a block diagram of certain components within the portable electronic device 22 is shown. In the present embodiment, the portable electronic device 22 is based on the computing environment and functionality of a wireless personal digital assistant. It will be understood, however, that the portable electronic device 22 is not limited to a wireless personal digital assistant. Other portable electronic devices are possible, such as cellular telephones, smart telephones, and laptop computers. Referring again to the present embodiment, the portable electronic device 22 is based on a microcomputer including a processor 40 connected to a read-only-memory (ROM) 42 that contains a plurality of applications executable by the processor 40 that enables the portable electronic device 22 to perform certain functions including, for example, internet browser functions, and backup/restore functions. The processor 40 is also connected to a random access memory (RAM) unit 44 and a persistent storage device 46 which includes the database 23. The RAM unit 44 and persistent storage device 46 are responsible for various non-volatile storage functions of the portable electronic device 22. The processor 40 receives input from various input devices including a keypad 48. The processor 40 outputs to various output devices including an LCD display 50 and a speaker 52. A microphone 54 and phone speaker 56 are connected to the processor 40 for cellular telephone functions. The processor 40 is also connected to an internal clock 58 and a modem and radio device 60. The modem and radio device 60 is used to connect to wireless networks using an antenna 62. The modem and radio device 60 transmits and receives voice and data communications to and from the portable electronic device 22 through the antenna 62.

The portable electronic device 22 is operable to effect two way communications of voice and data. Thus, the portable electronic device 22 transmits and receives voice communications over the wireless network and infrastructure 28 via wireless communications with the base station 24 over a radio communications channel. Similarly, the portable electronic device 22 transmits and receives data communications over the wireless network and infrastructure 28 via wireless radio communications with the base station 24 over a radio communications channel.

It will be understood that the functions described herein can be carried out in any suitable manner. In the present example, the functions are carried out by algorithms executable by the processor 40. For example, the processor 40 of the portable electronic device 22 is operable to perform hash functions by retrieving data from the database 23 on the persistent storage device 46 and generating a hash, thereby placing the accessed data in short-digest form. The processor 40 is further operable to provide the generated hash to the radio device 60 for transmission from the portable electronic device 22 to the radio communication system 20 over the radio communications channel.

The microcomputer of the portable electronic device 22 is operable to store data records retrieved from a network address and store the data records with attributes specifying the network address from which the data records are retrieved. The portable electronic device 22 is also operable to transmit the network address identifier to the communication system for retrieval of the data record from the network address.

It will be appreciated that the portable electronic device 22 is operable to perform many other functions, some of which will be evident from the following description.

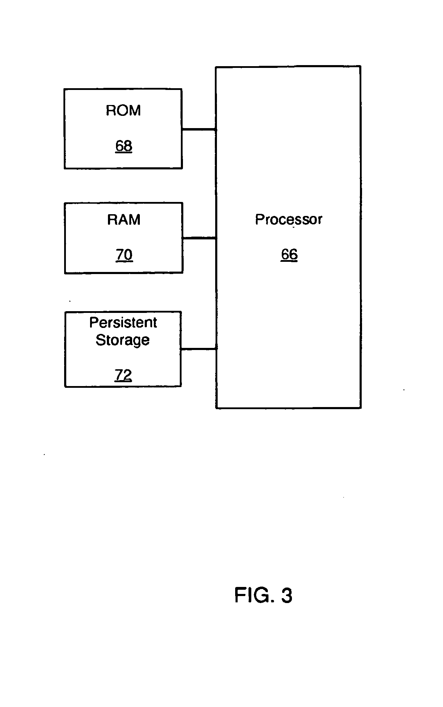

Reference is now made to Figure 3 which shows a block diagram of certain components within the server 32. Similar to the portable electronic device 22, the server 32 includes a processor 66 connected to a read only memory (ROM) 68 that includes applications executable by the processor 66 and enables the server 32 to perform certain functions including synchronization with the portable electronic device 22. The processor 66 is also connected to a random access memory (RAM) unit 70 and a persistent storage device 72 which are responsible for various non-volatile storage functions of the server 32.

It will be understood that the functions described herein can be carried out in any suitable manner. In the present example, the functions are carried out by algorithms executable by the processor 66. For example, the processor 66 of the server 32 is operable to receive communications generated by the portable electronic device 22 during backup of data at the portable electronic device 22 and to transmit data to the portable electronic device 22. The server 32 is operable to receive a network address from the portable electronic device 22 and, in response, to obtain a data record from the specified network address and store the data record in the database 38. Further, the processor 66 of the synchronization server 32 is operable to perform hash functions on any data record and generating a hash or by generating a group hash from a number of data record hashes. The synchronization server 32 is operable to receive a hash generated by the portable electronic device 22 and, in response, to compare the hash information from this hash to the hash information from the locally generated hash, generated by the synchronization server 32. The synchronization server 30 is also operable to request additional information from the portable electronic device 22, based on and in response to results of the comparison of the hash information from the hash generated by the portable electronic device 22 with the hash information from the locally generated hash. The request for additional information is provided to the relay 28 and, through the base station 24, is transmitted to the portable electronic device 22. The request for additional information can be a request for additional hash information or a request for data records. Further, the synchronization server 32 is operable to receive data transmitted from the portable electronic device 22 (through the base station 24 and relay device 28) and to write the data by adding the data or overwriting the data to the database 38. Further still, the synchronization server 32 stores synchronization history data in the persistent storage device 72, thereby maintaining a listing of changes made to the database 38 connected to the synchronization server 30 and to the database 23 of the portable electronic device 22. It will be understood that the synchronization server 32 accesses the synchronization history data during synchronization operations to reduce the data communicated between the communication system 20 and the portable electronic device 22 in subsequent synchronizations by determining previously synchronized data.

It will be appreciated that the server 32 is operable to carry out many other functions, some of which will be apparent from the following description.

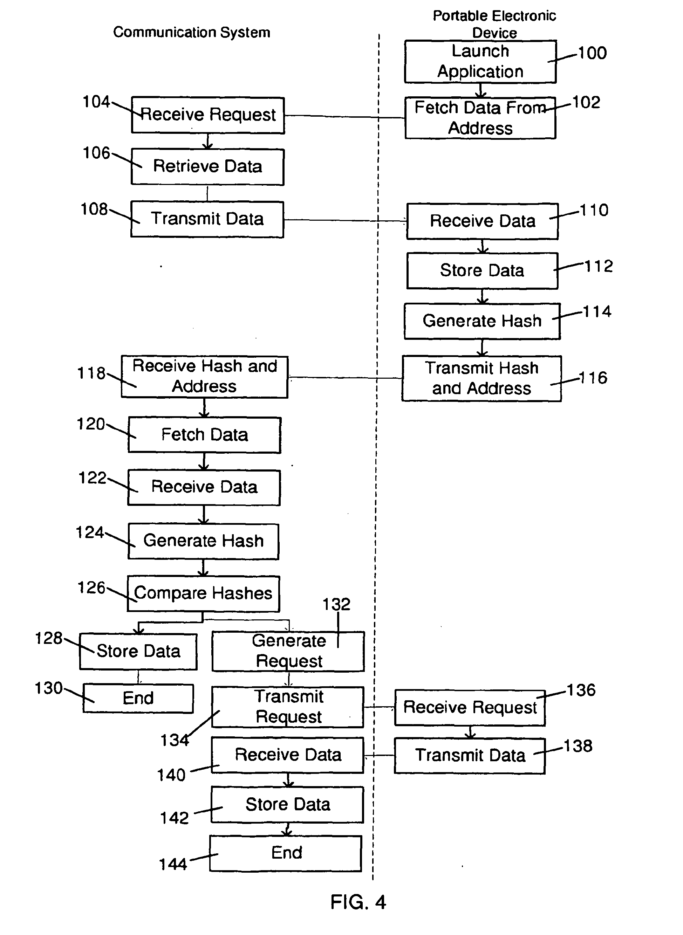

Reference is now made to Figure 4, which shows a sequence diagram illustrating functions carried out at both the portable electronic device 22 and the communication system 20 during the receiving of data content at the portable electronic device 22 and during synchronizing by backing up the data content stored at the database 23 of the portable electronic device with the database 34 at the communication system 20, in accordance with one embodiment of the present application. Coding of software for carrying out such steps is well within the scope of a person of ordinary skill in the art.

First, a user of the portable electronic device 22 selects a Web browser application stored in the ROM 48 by user selection of an icon displayed on the LCD display 50, thereby causing the processor 40 to execute the web browser application which allows the user to locate and display Web pages on the portable electronic device 22 at step 100. The user then requests data content at step 102 from a network site. In the present embodiment, the network site is an internet site. To request the data content, the user enters a desired Uniform Resource Locator (URL) using, for example, the keypad 48 of the portable electronic device 22. It will be appreciated that the URL is a network address on the World Wide Web. After typing the URL and, for example, pressing enter to fetch the content of the URL, the fetch request is sent to the base station 24 and received at the wireless network and infrastructure 26 at step 104. For the purpose of the present exemplary embodiment, the content requested is a multimedia data record such as a picture. Thus, the URL specifies the location of the multimedia data record to be fetched.

The multimedia data record is then retrieved from a content server connected to the internet 29 at step 106 and transmitted over the radio communications channel to the portable electronic device 22 at step 108.

The multimedia data record is received at the portable electronic device 22 and upon receipt at the portable electronic device 22, the multimedia data record is displayed on the LCD display 50 at step 110. After viewing the multimedia data record on the portable electronic device 22, the user has the option of simply closing out the Web browser application without saving the multimedia data record that was received. In this case, the multimedia data record is not saved at the portable electronic device 22. For the present example, however, the user decides to save the multimedia data record to the database 23 in the persistent storage 46 of the portable electronic device 22. The user saves the multimedia data record by selecting a save option using, for example, the keypad 48 or other input device on the portable electronic device 22. The processor 40 then saves the multimedia data file by storing in the database 23 on the persistent storage 46 with an attribute specifying the URL from which the multimedia data file was fetched, at step 112. With the addition of any new data record, or with modification or deletion of an old data record, a backup procedure is invoked to maintain a backup of data records stored at the portable electronic device 22 and to thereby keep the data records in the backup/restore database 38 synchronized with the data records at the portable electronic device.

Upon storing the multimedia data record with the attribute specifying the URL from which the multimedia data record was obtained, the portable electronic device 40 generates a hash of the multimedia data record, thereby placing the multimedia data record in short-digest form at step 114. Hash generation includes, for example, computation of check sums as well as other hash function computations. The URL and the hash of the multimedia data record are then transmitted over the radio communications channel to the communication system 20 for the server 32, along with a backup command at step 116.

The server 32 receives the backup command along with the hash of the multimedia data record and the URL specifying the location from which the multimedia data record was retrieved by the portable electronic device 22 at step 118. The server 32 then uses the URL to fetch the multimedia data record from the Web address specified by the URL, using the internet 29, at step 120. Thus, rather than receiving the multimedia data record by wireless transmission from the portable electronic device 22, the server 32 receives the URL and the hash which represents the content of the multimedia data record in short digest form. The multimedia data record is then received at the server 32 at step 122. To ensure that the multimedia data record retrieved by the server 32 matches the original multimedia data record retrieved by the portable electronic device 22, the server 30 generates a hash of the multimedia data record received at the server, referred to herein as the locally generated hash, at step 124. The locally generated hash is then compared by the server 32, with the hash of the multimedia data record generated and transmitted to the server by the portable electronic device 22, at step 126. If the hash values are determined to match, this serves as confirmation that the multimedia data record saved at the portable electronic device 22 is the same multimedia data record fetched by the server 32. The multimedia data record is then saved in the database 38 at step 128 and the backup process ends at step 130.

If, on the other hand, there is a mismatch in the hash values compared at step 126, the server 32 generates a request for the multimedia data record at step 132 and transmits the request to the portable electronic device 22 at step 134.

The portable electronic device receives the request for the multimedia data record at step 136 and transmits the multimedia data record to the communication system 20 for the server at step 138.

Upon receipt of the multimedia data record at the communication system 20, the multimedia data record is forwarded to the server 32 at step 140 and stored in the database 38 at step 142. The process ends at step 144. Thus, a backup copy of the multimedia data record is stored in the database 38 and the backup process ends. The backup process as described above with reference to Figure 4 maintains the database 38 in synchronization with a corresponding database at the portable electronic device 22.

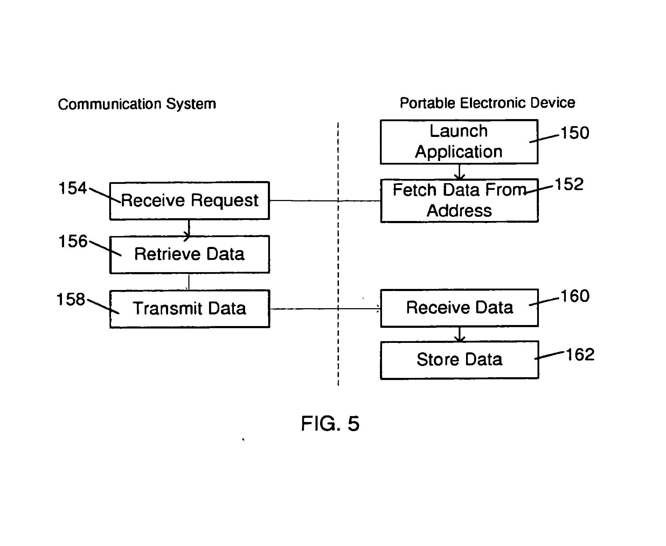

Reference is now made to Figure 5 which shows a sequence diagram illustrating functions carried out at both the portable electronic device 22 and the communication system 20 during the receiving of data content at the portable electronic device 22, in accordance with one aspect of an embodiment. Coding of software for carrying out such steps is well within the scope of a person of ordinary skill in the art.

Similar to the first-described example, a user of the portable electronic device 22 selects a Web browser application stored in the ROM 48 by user selection of an icon displayed on the LCD display 50, thereby causing the processor 40 to execute the web browser application at step 150. The user then requests data content at step 152 from a network site. In the present embodiment, the network site is an internet site. To request the data content, the user enters a desired Uniform Resource Locator (URL) using, for example, the keypad 48 of the portable electronic device 22 to fetch the content of the URL. The fetch request is sent to the base station 24 and received at the wireless network and infrastructure 26 at step 154. For the purpose of the present exemplary embodiment, the content requested is a multimedia data record such as a song. Thus, the URL specifies the location of the multimedia data record to be fetched.

The multimedia data record is then retrieved from a content server connected to the internet 29 at step 156 and transmitted over the radio communications channel to the portable electronic device 22 at step 158.

The multimedia data record is then received at the portable electronic device 22 and upon receipt at the portable electronic device 22, the multimedia data record is displayed on the LCD display 50 at step 160. After viewing the multimedia data record on the portable electronic device 22, the user saves the multimedia data record to the database 23 in the persistent storage 46 of the portable electronic device 22, at step 162.

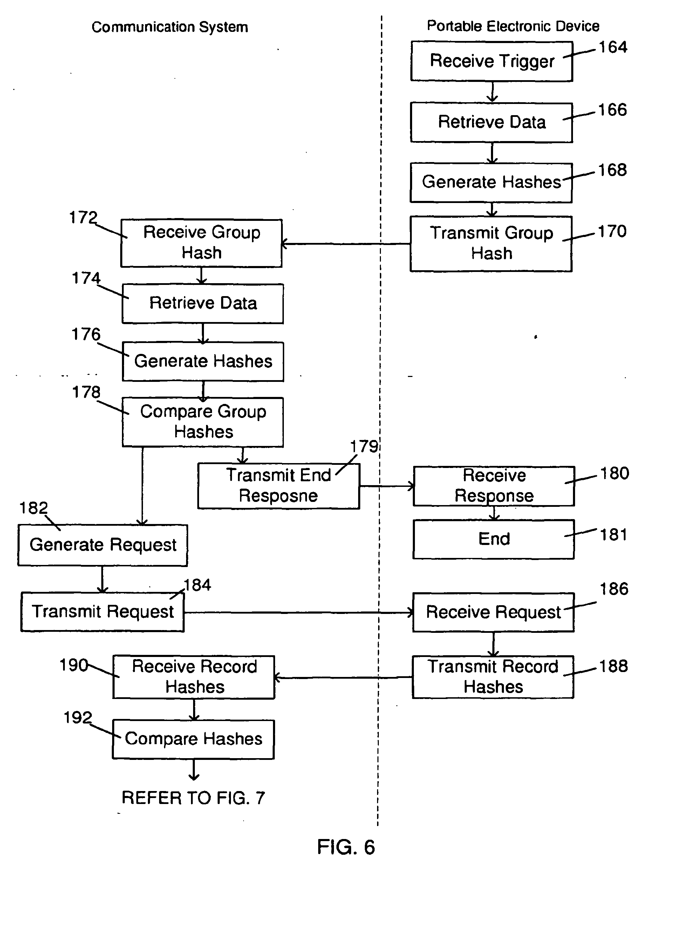

In the present exemplary embodiment, a full synchronization process is carried out. Reference is made to Figure 6 which shows a sequence diagram illustrating functions carried out at both the portable electronic device 22 and the communication system 20 during synchronizing of the database 23 of the portable electronic device 22 with the database 34 at the communication system 20, in accordance with one embodiment of the present application. Again, coding of software for carrying out such steps is well within the scope of a person of ordinary skill in the art.

First, the portable electronic device 22 receives a synchronization trigger at 164, from, for example, a user input from the keypad 48. Alternatively, the portable electronic device 22 receives a synchronization trigger from the communication system 20. In response to receipt of the synchronization trigger, data is retrieved from the database 23 at step 166 and the processor 40 first generates a record hash for each data record of the database 23 and then generates a group hash for the database 23, based on the individual record hashes at step 168. Thus, the group hash is a hash representative of the data records of the database 23. After generation of the group hash, an initialize command is transmitted along with the group hash at step 170 to the communication system 20 over a radio communication channel. The initialize command initiates the synchronization process at the synchronization server 30, identifies the database for synchronization and provides synchronization session state information including a session state identifier.

The communication system 20 receives the group hash at step 172 by receipt at the base station 24 and forwards the group hash on to the synchronization server 32. In response to receipt of the group hash from the portable electronic device 22, data is retrieved from the database 38 at step 174 and the processor 66 of the synchronization server 32 first generates a record hash for each data record (referred to herein as the locally generated record hashes) of the database 38 and a group hash for the database 38 (referred to herein as the locally generated group hash) is generated based on the locally generated record hashes at step 176. After generation of the locally generated group hash, the hash information of the group hash received from the portable electronic device 22 is compared with the hash information of the corresponding locally generated group hash at step 178. If the comparison of the hash information indicates that the database 23 of the portable electronic device 22 is not in mismatch with the database 38 of the communication system 20, then the synchronization process ends at step 180. If, however, the comparison of the hash information indicates that the database 23 of the portable electronic device 22 is in mismatch with the corresponding database 38 of the communication system 20, then at least one of the data records of one of the databases 23, 38 is to be updated and a request for additional hash information is generated by the synchronization server 32 at step 182. The request for additional hash information is a request for hash information associated with each data record. The additional hash information is requested for each data record of the database 23 of the portable electronic device 22. After generation of the request for additional hash information, the request is then transmitted at step 184 to the portable electronic device 22.

Once the request for additional hash information is received at the portable electronic device 22 at step 186, each record hash generated at step 168 is transmitted to the communication system 20.

The additional hash information, in the form of record hashes, is received at the communication system 20 and delivered to the synchronization server 32 at step 190. In response to receipt of the requested additional hash information, the record hashes received from the portable electronic device 22 are compared with the respective locally generated record hashes at step 192 and a determination is made as to which data records, represented by the additional hash information, have changed. With the determination of which data records have changed at step 192, the databases 23, 38 are synchronized by updating the database 38 at communication system 20 or the database 23 at the portable electronic device 22 or the databases 38, 23 at both the communication system 20 and the portable electronic device 22 that are determined to be mismatched. With the determination of a mismatch, a conflict resolution policy is run, thereby determining how the mismatched records are to be updated (i.e. whether to update the database records on the portable electronic device 22 with the database records of the synchronization server 32 or vice versa).

For the purpose of the present example, the multimedia data record stored in the database 23 at the portable electronic device 22 is not present in the database 38. Thus, the synchronization server 32 determines that the database 38 is to be updated to reflect the addition of the multimedia data record to the database 23.

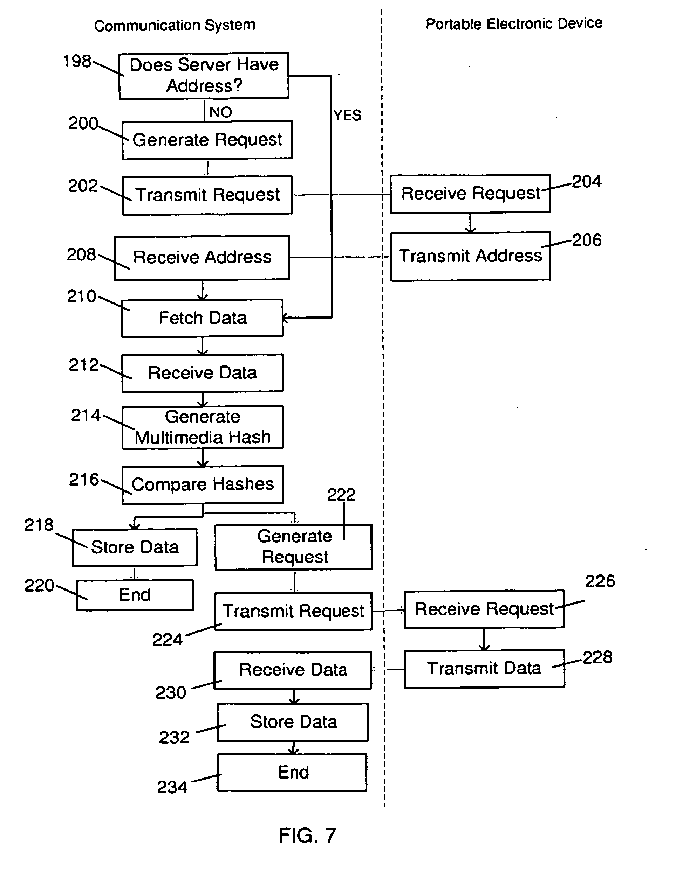

Referring now to Figure 7, there is shown a sequence diagram illustrating functions carried out at both the portable electronic device 22 and the communication system 20 during updating of the database 38 of the communication system 20. Again, coding of software for carrying out such steps is well within the scope of a person of ordinary skill in the art. If it is determined at step 192 that additional data records or changes to data records at the portable electronic device 22 are not yet reflected at the communication system 20, it is first determined if the URL from which the multimedia data record was retrieved is present at the communication system 32 at step 198. If so, then the method proceeds to step 210 (described below).

If the URL from which the multimedia data record was retrieved is not present at the communication system 20, a fetch request is generated by the synchronization server 30 as shown at step 200. The fetch request is then transmitted to the portable electronic device 22 at step 202, thereby requesting the URL from which the multimedia data record was retrieved.

The fetch request is received at the portable electronic device 22 at step 204 and in response, the portable electronic device transmits the URL from which the multimedia data record was retrieved, over the radio communications channel to the communication system 20 for the server 32 at step 206.

The server 32 receives the URL specifying the location from which the multimedia data record was retrieved by the portable electronic device 22 at step 208. The URL is used by the server 32 to fetch the multimedia data record, using the internet 29, at step 210. Thus, rather than receiving the multimedia data record by wireless transmission from the portable electronic device 22, the server 32 uses the URL. The multimedia data record is then received at the server 32 at step 212. To ensure that the multimedia data record retrieved by the server 32 matches the original multimedia data record retrieved by the portable electronic device 22, the server 30 generates a hash of the multimedia data record received at the server, referred to herein as the locally generated multimedia hash, at step 214. The locally generated multimedia hash is then compared by the server 32, with the hash of the multimedia data record generated and transmitted to the server by the portable electronic device 22, at step 216. If the hash values are determined to match, this serves as confirmation that the multimedia data record saved at the portable electronic device 22 is the same multimedia data record fetched by the server 32. The multimedia data record is then saved in the database 38 at step 218 and the synchronization process ends for that data record at step 220.

If, on the other hand, there is a mismatch in the hash values compared at step 216, the server 32 generates a request for the multimedia data record at step 222 and transmits the request to the portable electronic device 22 at step 224.

The portable electronic device receives the request for the multimedia data record at step 226 and transmits the multimedia data record to the communication system 20 for the server at step 228.

Upon receipt of the multimedia data record at the communication system 20, the multimedia data record is forwarded to the server 32 at step 230 and stored in the database 38 at step 232. The synchronization process ends for that data record at step 234.

While the embodiments described herein are directed to particular implementations of the method and apparatus for storing data from a network address, it will be understood that modifications and variations to this embodiment are within the sphere and scope of the present application. For example, rather than invoking a data record backup each time a new data record is added or a data record is modified or deleted as described in the first-described embodiment with reference to Figure 4, a record of data records that have been added, deleted or modified can be kept so that a backup procedure is carried out for multiple data records at one time or can be carried out at specified times. Also, the above-described embodiments relate to the retrieval of a data record from the Internet. The present application, however, is not limited to retrieval of data records from the Internet. For example, data records can be retrieved from an intranet or even a mail attachment located on a user's mail store. Thus, rather than sending a URL for locating the data record on the World Wide Web, a suitable network address identifier can be sent for locating the data record. Further, the above embodiments have been described in relation to data records that are added to the database at the portable electronic device. Data records can also be updated by storing new versions of the data records over old versions. In such a case, the network address identifier is again sent to the synchronization server to retrieve and store the updated data record. It is also contemplated that the hash value of the data record retrieved from the network can be stored as an attribute of the data record. Thus, the data record is stored with the network address as an attribute and the representation of the record (the hash value) as an attribute.

Other modifications and variations are possible. For example, it will be understood that the portable electronic device 22 is not limited to a single database as any suitable number of databases is possible. Similarly, the communication system 20 may include any suitable number of databases. It will also be understood that the steps described hereinabove are not limited to the order in which they are described. For example, certain steps can occur simultaneously while other steps can occur, for example, prior to synchronization.

Many other modifications and variations may occur to those skilled in the art. All such modifications and variations are believed to be within the sphere and scope of the present application.

## Claims

1. A method of storing data from a network resource associated with a network address, in a database (23) of a portable electronic device (22), the method comprising:
obtaining at said portable electronic device (22) a data record from the network resource associated with the network address;
storing said data record along with a network address identifier, wherein storing said data record comprises
generating a content representation for said data record; and
transmitting said network address identifier and said content representation to a backup device (32) for retrieval of said data record from the network address and storage of said data record in a backup database (36), if said content representation is in agreement with a representation of said content of said data record retrieved by said backup device (32).

2. The method according to claim 1, wherein storing said data record further comprises storing said content representation with said data record.

3. The method of claim 1 or claim 2, further comprising:
receiving a request from said backup device (32) for full data record transfer, if said content representation is not in agreement with said representation of said content of said data record retrieved by said backup device (32); and
transmitting said full data record to said backup device (32) for storage in said backup database (36), in response to said receiving said request.

4. The method according to any one of the preceding claims, wherein said network address identifier is stored as a field of said data record.

5. The method according to claim 4, wherein said content representation is stored as a field of said data record.

6. A method of storing data from a network resource associated with a network address at a backup device (32), the method comprising:
receiving at said backup device (32) a network address identifier and a content representation associated with a data record stored at a database (23) of a portable electronic device (22);
retrieving said data record from the network address using said network address identifier;
comparing said content representation for said data record to a representation of content of said data record retrieved by said backup device (32), prior to storing said data record; and if said content representation is in agreement with said representation of said content of said data record retrieved by said backup device (32), proceeding to said storing the data record in said backup database (36).

7. The method of claim 6 further comprising, if said content representation is not in agreement with said representation of said content of said data record retrieved by said backup device (32):
transmitting a request for full data record transfer from said portable electronic device (22);
receiving said full data record from said portable electronic device (22); and
proceeding to said storing said data record in said backup database (36).

8. The method according to claim 6 and claim 7, wherein said content representation for said data record is received along with said network address identifier.

9. The method according to claim 6, comprising:
generating said representation of content of said data record at said backup device (32), prior to comparing.

10. The method according to claim 6, wherein receiving said content representation for said data record comprises receiving a hash value representative of said data record and comparing comprises comparing said hash value representative of said data record with a hash value representative of the data record retrieved by said backup device (32).

11. A system for storing data from a from a network resource associated with a network address, the system comprising:
a memory for storage of a backup database (36);
a receiver for receiving a network address identifier and a content representation associated with a data record stored at a database (23) of a portable electronic device (22); and
a processor (66) operably coupled to said receiver and said memory, said processor (66) enabled for:
retrieving said data record from said network address using said network address identifier; comparing said content representation for said data record to a representation of content of said data record retrieved by said backup device (32), prior to storing the data record and
if said content representation is in agreement with said representation of said content of said data record retrieved by said backup device (32),
proceeding to said storing the data record in said backup database (36),
if said content representation is not in agreement with said representation of said content of said data record retrieved by said backup device (32):
transmitting a request for full data record transfer from said portable electronic device (22);
receiving said full data record from said portable electronic device (22); and
proceeding to said storing the data record in said backup database (36).

12. A portable electronic device (22) comprising:
a memory (46) for storage of a database (23) of records;
a transmitter and receiver (60, 62) for receiving a data record from a network resource associated with a network address;
a processor (40) coupled to said memory and said transmitter and receiver, said processor enabled for:
obtaining said data record from said network address;
generating a content representation for said data record;
storing said data record with a network address identifier associated with the data record, in said database (23) of said memory; and via said transmitter:
transmitting the network address identifier and said content representation to a backup device (32) during synchronization, for retrieval of said data record from said network address and storage of said data record in a backup database (36), if said content representation is in agreement with a representation of said content of said data record retrieved by said backup device; and
transmitting said data record to said backup device (32) for storage in said backup database (36), in response to a request from said backup device (32) for full data record transfer, if said content representation is not in agreement with said representation of said content of said data record retrieved by said backup device (32).

13. A computer-readable medium having computer-readable code embodied therein for execution by a computing device (22), the computer-readable code comprising code adapted to perform the method of any one of claims 1 to 5.

14. A computer-readable medium having computer-readable code embodied therein for execution by a processor (66), the computer-readable code comprising code adapted to perform the method of any one of claims 6 to 10.

## Patentansprüche

1. Verfahren zur Speicherung von Daten von einer Netzwerkressource, die einer Netzwerkadresse zugeordnet ist, in einer Datenbank (23) eines tragbaren elektronischen Geräts (22), wobei das Verfahren umfasst:
Erhalten eines Datensatzes von der Netzwerkressource, die einer Netzwerkadresse zugeordnet ist, an dem tragbaren elektronischen Gerät (22);
Speichern dieses Datensatzes zusammen mit einer Netzwerkadresskennung, wobei das Speichern des Datensatzes umfasst:
Erzeugen einer Darstellung des Inhalts des Datensatzes; und
Senden der Netzwerkadresskennung und der Darstellung des Inhalts an ein Backup-Gerät (32) zwecks Abrufs des Datensatzes von der Netzwerkadresse und Speicherung des Datensatzes in einer Backup-Datenbank (36), wenn die Darstellung des Inhalts mit einer Darstellung des Inhalts des Datensatzes übereinstimmt, die durch das Backup-Gerät (32) abgerufen wurde.

2. Verfahren nach Anspruch 1, wobei die Speicherung des Datensatzes ferner das Speichern der Darstellung des Inhalts zusammen mit dem Datensatz umfasst.

3. Verfahren nach Anspruch 1 oder 2, ferner umfassend:
Empfangen einer Anforderung einer Übertragung des vollständigen Datensatzes von dem Backup-Gerät (32), wenn die Darstellung des Inhalts nicht mit der Darstellung des Inhalts des Datensatzes übereinstimmt, die durch das Backup-Gerät (32) abgerufen wurde; und
Übertragen des vollständigen Datensatzes an das Backup-Gerät (32) zwecks Speicherung in der Backup-Datenbank (36), als Reaktion auf das Empfangen der Anforderung.

4. Verfahren nach einem der vorstehenden Ansprüche, wobei die Netzwerkadresskennung als ein Feld des Datensatzes gespeichert wird.

5. Verfahren nach Anspruch 4, wobei die Darstellung des Inhalts als ein Feld des Datensatzes gespeichert wird.

6. Verfahren zur Speicherung von Daten von einer Netzwerkressource, die einer Netzwerkadresse zugeordnet ist, auf einem Backup-Gerät (32), wobei das Verfahren umfasst:
Empfangen einer Netzwerkadresskennung und einer Darstellung des Inhalts, die einem in einer Datenbank (23) eines tragbaren elektronischen Geräts (22) gespeicherten Datensatz zugeordnet sind, an dem Backup-Gerät (32);
Abrufen des Datensatzes von der Netzwerkadresse unter Verwendung der Netzwerkadresskennung;
Vergleichen der Darstellung des Inhalts für den betreffenden Datensatz mit einer Darstellung des Inhalts des Datensatzes, die von dem Backup-Gerät (32) abgerufen wurde, bevor der Datensatz gespeichert wird; und, wenn die Darstellung des Inhalts mit der Darstellung des Inhalts des Datensatzes übereinstimmt, die durch das Backup-Gerät (32) abgerufen wurde, Fortfahren mit dem Speichern des Datensatzes in der Backup-Datenbank (36).

7. Verfahren nach Anspruch 6, ferner umfassend, wenn die Darstellung des Inhalts nicht mit der Darstellung des Inhalts des Datensatzes übereinstimmt, die durch das Backup-Gerät (32) abgerufen wurde:
Senden einer Anforderung einer Übertragung des vollständigen Datensatzes von dem tragbaren elektronischen Gerät (22);
Empfangen des vollständigen Datensatzes von dem tragbaren elektronischen Gerät (22); und
Fortfahren mit dem Speichern des Datensatzes in der Backup-Datenbank (36).

8. Verfahren nach Anspruch 6 und 7, wobei die Darstellung des Inhalts für den Datensatz zusammen mit der Netzwerkadresskennung empfangen wird.

9. Verfahren nach Anspruch 6, umfassend:
Erzeugen der Darstellung des Inhalts des Datensatzes an dem Backup-Gerät (32) vor dem Vergleichen.

10. Verfahren nach Anspruch 6, wobei das Empfangen der Darstellung des Inhalts für den Datensatz umfasst, eine Hash-Wert zu empfangen, der den Datensatz repräsentiert, und das Vergleichen umfasst, diesen Hash-Wert, der den Datensatz repräsentiert, mit einem Hash-Wert zu vergleichen, der den Datensatz repräsentiert, welcher durch das Backup-Gerät (32) abgerufen wurde.

11. System zur Speicherung von Daten von einer Netzwerkressource, die einer Netzwerkadresse zugeordnet ist, wobei das System umfasst:
einen Speicher zum Speichern einer Backup-Datenbank (36);
eine Empfänger zum Empfangen einer Netzwerkadresskennung und einer Darstellung des Inhalts, die einem in einer Datenbank (23) eines tragbaren elektronischen Geräts (22) gespeicherten Datensatz zugeordnet sind; und
einen Prozessor (66), der operativ mit dem Empfänger und dem Speicher verbunden ist, wobei der Prozessor (66) dafür ausgelegt ist:
den Datensatz von der Netzwerkadresse unter Verwendung der Netzwerkadresskennung abzurufen; die Darstellung des Inhalts für diesen Datensatz mit einer Darstellung des Inhalts des Datensatzes zu vergleichen, die durch das Backup-Gerät (32) abgerufen wurde, bevor der Datensatz gespeichert wird, und
wenn die Darstellung des Inhalts mit der Darstellung des Inhalts des Datensatzes übereinstimmt, die durch das Backup-Gerät (32) abgerufen wurde,
Fortfahren mit dem Speichern des Datensatzes in der Backup-Datenbank (36),
wenn die Darstellung des Inhalts nicht mit der Darstellung des Inhalts des Datensatzes übereinstimmt, die durch das Backup-Gerät (32) abgerufen wurde:
Senden einer Anforderung einer Übertragung des vollständigen Datensatzes von dem tragbaren elektronischen Gerät (22);
Empfangen des vollständigen Datensatzes von dem tragbaren elektronischen Gerät (22); und
Fortfahren mit dem Speichern des Datensatzes in der Backup-Datenbank (36).

12. Tragbares elektronisches Gerät (22), umfassend:
einen Speicher (46) zum Speichern einer Datenbank (23) mit Datensätzen;
einen Sender und Empfänger (60, 62) zum Empfangen eines Datensatzes von einer Netzwerkressource, die einer Netzwerkadresse zugeordnet ist;
einen Prozessor (40), der mit dem Speicher und dem Sender und Empfänger gekoppelt ist, wobei der Prozessor dafür ausgelegt ist:
den Datensatz von der Netzwerkadresse abzurufen;
eine Darstellung des Inhalts des Datensatzes zu erzeugen;
den Datensatz zusammen mit einer Netzwerkadresskennung, die dem Datensatz zugeordnet ist, in der Datenbank (23) des Speichers zu speichern; sowie über den Sender:
die Netzwerkadresskennung und die Darstellung des Inhalts während der Synchronisation an ein Backup-Gerät (32) zu senden, zwecks Abrufs des Datensatzes von der Netzwerkadresse und Speicherung des Datensatzes in einer Backup-Datenbank (36), wenn die Darstellung des Inhalts mit einer Darstellung des Inhalts des Datensatzes übereinstimmt, die durch das Backup-Gerät abgerufen wurde; und
den Datensatz an das Backup-Gerät (32) zu übertragen zwecks Speicherung in der Backup-Datenbank (36) als Reaktion auf eine Anforderung einer Übertragung des vollständigen Datensatzes von dem Backup-Gerät (32), wenn die Darstellung des Inhalts nicht mit der Darstellung des Inhalts des Datensatzes übereinstimmt, die durch das Backup-Gerät (32) abgerufen wurde.

13. Computerlesbarer Datenträger, auf dem computerlesbarer Code ausgeführt ist zur Ausführung durch ein Datenverarbeitungsgerät (22), wobei der computerlesbare Code solchen Code umfasst, der für die Ausführung des Verfahrens nach einem der Ansprüche 1 bis 5 geeignet ist.

14. Computerlesbarer Datenträger, auf dem computerlesbarer Code ausgeführt ist zur Ausführung durch einen Prozessor (66), wobei der computerlesbare Code solchen Code umfasst, der für die Ausführung des Verfahrens nach einem der Ansprüche 6 bis 10 geeignet ist.

## Revendications

1. Un procédé pour stocker des données d'une ressource réseau associée à une adresse réseau, dans une base de données (23) d'un dispositif électronique portatif (22), le procédé comportant :
l'obtention au niveau dudit dispositif électronique portatif (22) d'un enregistrement de données de la ressource réseau associée à l'adresse réseau ;
le stockage dudit enregistrement de données avec un identifiant d'adresse réseau, où le stockage dudit enregistrement de données comporte
la génération d'une représentation de contenu pour ledit enregistrement de données ; et
la transmission dudit identifiant d'adresse réseau et ladite représentation de contenu à un dispositif de sauvegarde (32) en vue d'une récupération dudit enregistrement de données de l'adresse réseau et d'un stockage dudit enregistrement de données dans une base de données de sauvegarde (36), si ladite représentation de contenu est en accord avec une représentation dudit contenu dudit enregistrement de données récupéré par ledit dispositif de sauvegarde (32).

2. Le procédé selon la revendication 1, où le stockage dudit enregistrement de données comporte de plus le stockage de ladite représentation de contenu avec ledit enregistrement de données.

3. Le procédé de la revendication 1 ou de la revendication 2, comportant de plus :
la réception d'une demande dudit dispositif de sauvegarde (32) pour un transfert d'enregistrement de données intégral, si ladite représentation de contenu n'est pas en accord avec ladite représentation dudit contenu dudit enregistrement de données récupéré par ledit dispositif de sauvegarde (32) ; et
la transmission dudit enregistrement de données intégral audit dispositif de sauvegarde (32) en vue d'un stockage dans ladite base de données de sauvegarde (36), en réponse à ladite réception de ladite demande.

4. Le procédé selon n'importe laquelle des revendications précédentes, où ledit identifiant d'adresse réseau est stocké comme champ dudit enregistrement de données.

5. Le procédé selon la revendication 4, où ladite représentation de contenu est stockée comme champ dudit enregistrement de données.

6. Un procédé pour stocker des données d'une ressource réseau associée à une adresse réseau au niveau d'un dispositif de sauvegarde (32), le procédé comportant :
la réception au niveau dudit dispositif de sauvegarde (32) d'un identifiant d'adresse réseau et d'une représentation de contenu associés à un enregistrement de données stocké au niveau d'une base de données (23) d'un dispositif électronique portatif (22) ;
la récupération dudit enregistrement de données de l'adresse réseau en utilisant ledit identifiant d'adresse réseau ;
la comparaison de ladite représentation de contenu pour ledit enregistrement de données avec une représentation de contenu dudit enregistrement de données récupéré par ledit dispositif de sauvegarde (32), avant de stocker ledit enregistrement de données ; et si ladite représentation de contenu est en accord avec ladite représentation dudit contenu dudit enregistrement de données récupéré par ledit dispositif de sauvegarde (32), l'exécution dudit stockage de l'enregistrement de données dans ladite base de données de sauvegarde (36).

7. Le procédé de la revendication 6 comportant de plus, si ladite représentation de contenu n'est pas en accord avec ladite représentation dudit contenu dudit enregistrement de données récupéré par ledit dispositif de sauvegarde (32) :
la transmission d'une demande pour un transfert d'enregistrement de données intégral dudit dispositif électronique portatif (22) ;
la réception dudit enregistrement de données intégral dudit dispositif électronique portatif (22) ; et
l'exécution dudit stockage dudit enregistrement de données dans ladite base de données de sauvegarde (36).

8. Le procédé selon la revendication 6 et la revendication 7, où ladite représentation de contenu pour ledit enregistrement de données est reçue avec ledit identifiant d'adresse réseau.

9. Le procédé selon la revendication 6, comportant :
la génération de ladite représentation de contenu dudit enregistrement de données au niveau dudit dispositif de sauvegarde (32), avant de comparer.

10. Le procédé selon la revendication 6, où la réception de ladite représentation de contenu pour ledit enregistrement de données comporte la réception d'une valeur de hachage représentative dudit enregistrement de données et la comparaison comporte la comparaison de ladite valeur de hachage représentative dudit enregistrement de données avec une valeur de hachage représentative de l'enregistrement de données récupéré par ledit dispositif de sauvegarde (32).

11. Un système pour stocker des données d'une ressource réseau associée à une adresse réseau, le système comportant :
une mémoire pour stocker une base de données de sauvegarde (36) ;
un récepteur pour recevoir un identifiant d'adresse réseau et une représentation de contenu associés à un enregistrement de données stocké au niveau d'une base de données (23) d'un dispositif électronique portatif (22) ; et
un processeur (66) couplé de façon exploitable audit récepteur et à ladite mémoire, ledit processeur (66) étant équipé pour :
récupérer ledit enregistrement de données de ladite adresse réseau en utilisant ledit identifiant d'adresse réseau ; comparer ladite représentation de contenu pour ledit enregistrement de données avec une représentation de contenu dudit enregistrement de données récupéré par ledit dispositif de sauvegarde (32), avant de stocker l'enregistrement de données et
si ladite représentation de contenu est en accord avec ladite représentation dudit contenu dudit enregistrement de données récupéré par ledit dispositif de sauvegarde (32),
procéder audit stockage de l'enregistrement de données dans ladite base de données de sauvegarde (36),
si ladite représentation de contenu n'est pas en accord avec ladite représentation dudit contenu dudit enregistrement de données récupéré par ledit dispositif de sauvegarde (32) :
transmettre une demande pour un transfert d'enregistrement de données intégral dudit dispositif électronique portatif (22) ;
recevoir ledit enregistrement de données intégral dudit dispositif électronique portatif (22) ; et
procéder audit stockage de l'enregistrement de données dans ladite base de données de sauvegarde (36).

12. Un dispositif électronique portatif (22) comportant :
une mémoire (46) pour stocker une base de données (23) d'enregistrements ;
un transmetteur et un récepteur (60, 62) pour recevoir un enregistrement de données d'une ressource réseau associée à une adresse réseau ;
un processeur (40) couplé à ladite mémoire et auxdits transmetteur et récepteur, ledit processeur étant équipé pour :
obtenir ledit enregistrement de données de ladite adresse réseau ;
générer une représentation de contenu pour ledit enregistrement de données ;
stocker ledit enregistrement de données avec un identifiant d'adresse réseau associé à l'enregistrement de données, dans ladite base de données (23) de ladite mémoire ; et par l'intermédiaire dudit transmetteur :
transmettre ledit identifiant d'adresse réseau et ladite représentation de contenu à un dispositif de sauvegarde (32) durant la synchronisation, en vue d'une récupération dudit enregistrement de données de ladite adresse réseau et d'un stockage dudit enregistrement de données dans une base de données de sauvegarde (36), si ladite représentation de contenu est en accord avec une représentation dudit contenu dudit enregistrement de données récupéré par ledit dispositif de sauvegarde ; et
transmettre ledit enregistrement de données audit dispositif de sauvegarde (32) en vue d'un stockage dans ladite base de données de sauvegarde (36), en réponse à une demande dudit dispositif de sauvegarde (32) pour un transfert d'enregistrement de données intégral, si ladite représentation de contenu n'est pas en accord avec ladite représentation dudit contenu dudit enregistrement de données récupéré par ledit dispositif de sauvegarde (32).

13. Un support lisible par ordinateur sur lequel est intégré un code lisible par ordinateur destiné à être exécuté par un dispositif informatique (22), le code lisible par ordinateur comportant un code adapté pour réaliser le procédé de n'importe laquelle des revendications 1 à 5.

14. Un support lisible par ordinateur sur lequel est intégré un code lisible par ordinateur destiné à être exécuté par un processeur (66), le code lisible par ordinateur comportant un code adapté pour réaliser le procédé de n'importe laquelle des revendications 6 à 10.
